# EUROPÄISCHE PATENTSCHRIFT

(11) **EP 2 424 720 B1**
(45) Veröffentlichungstag und Bekanntmachung des Hinweises auf die Patenterteilung: **17.04.2013**
(21) Anmeldenummer: 10718483.0
(22) Anmeldetag: 23.04.2010
(51) Int. Cl.: B29C 47/10, B29C 31/02, B65D 88/64

(54) **ZUFÜHRVORRICHTUNG FÜR INSBESONDERE PULVERIGE STOFFE ZU EINER DIESE VERARBEITENDEN EINRICHTUNG**
FEEDING DEVICE PARTICULARLY FOR POWDERED MATERIALS INTO A DEVICE PROCESSING THE SAME
DISPOSITIF D'ALIMENTATION EN MATÉRIAUX NOTAMMENT PULVÉRULENTS D'UNE MACHINE TRAITANT CES MATÉRIAUX

(30) Priorität: 29.04.2009 DE 102009019144
(43) Veröffentlichungstag der Anmeldung: 07.03.2012
(73) Patentinhaber: Leistritz Extrusionstechnik GmbH, 90459 Nürnberg (DE)
(72) Erfinder: WALTER, Wolfgang, 73434 Aalen (DE); REIN, Robert, 90431 Nürnberg (DE)
(74) Vertreter: Blaumeier, Jörg
(86) Internationale Anmeldenummer: PCT/EP2010/002514
(87) Internationale Veröffentlichungsnummer: WO 2010/124822

(56) Entgegenhaltungen:
- WO-A1-01/38172
- DE-A1- 2 062 630
- FR-A1- 2 749 823
- FR-A1- 2 794 857
- GB-A- 1 254 059
- JP-U- 59 118 512
- SU-A1- 986 835
- SU-A1- 1 000 765
- SU-A1- 1 381 037

## Beschreibung

Die Erfindung betrifft eine Zuführvorrichtung für insbesondere pulverige Stoffe zu einer diese verarbeitenden Einrichtung, insbesondere einen Extruder, umfassend ein Gehäuse mit einem den Stoff aufnehmenden Aufnahmebereich, der seitlich über wenigstens eine flexible Wand verfügt, die mittels wenigstens einem an ihr angreifenden beweglichen mechanischen Element bewegbar ist.

Eine solche Zuführvorrichtung, häufig auch Seitenbeschickungseinrichtung genannt, dient insbesondere im Bereich der Verarbeitung granularer oder pulveriger Stoffe dazu, den jeweiligen Stoff einer nachgeschalteten Verarbeitungseinrichtung, üblicherweise einem Ein- oder Mehrschneckenextruder, dosiert zuzuführen. Die Zuführvorrichtung weist hierzu ein Gehäuse auf, häufig nach Art eines Trichters oder Troges, in den der Stoff eingegeben wird. Der Aufnahmebereich mündet oberhalb einer Fördereinrichtung, üblicherweise einer Zuführschnecke oder einer Doppelschnecke, über die der Stoff längsgefördert wird und dem Extruder dosiert zugegeben wird.

Vor allem bei der Zuführung pulveriger Stoffe kann es nun vorkommen, dass das pulverige Material an den Wänden des Aufnahmebereichs anhaftet und auf diese Weise der Auslassquerschnitt des Aufnahmebereichs zu der oder den Förderschnecken hin kontinuierlich abnimmt, weil sich dieser Bereich zusetzt. Hieraus resultiert, dass weniger Stoff in den Förderschneckenbereich gelangt, mithin also auch weniger Stoff zudosiert werden kann. Um dem entgegenzutreten ist es bekannt, den Aufnahmebereich mit wenigstens einer flexiblen Wand zu versehen respektive seitlich zu begrenzen und dieser Wand ein an ihr außenseitig angreifendes bewegliches mechanisches Element zuzuordnen, über das die Wand intermittierend bewegt, also verformt wird, so dass an ihr anhaftendes Material aufgrund der Wanddeformation abfällt. Ein solches im Stand der Technik bekanntes mechanisches Element ist in Form eines Paddels ausgestaltet, also eines flächigen, plattenförmigen Bauteils, das um eine parallel zur Wand verlaufende horizontale Achse schwenkgelagert ist und über einen entsprechenden Antrieb verschwenkt werden kann. Während dieser Schwenkbewegung wird es gegen die flexible Wand bewegt, drückt diese dabei leicht nach innen und verformt sie, so dass daran befindliches Material abfällt. Beispiele der Stand der Technik sind: JP 59118512, SU 986835, DE 2062630, GB 1254059, FR 2794857, SU 1000765, WO 0138172 und FR 2749823. Zwar kann hierüber ein Anhaften des Material einigermaßen verhindert werden, jedoch ist der mechanische Aufwand beachtlich groß. Darüber hinaus ist, da es sich um eine infolge der relativ langsam erfolgenden Schwenkbewegung eher langsam und harmonisch ablaufende Wandverformung handelt, nicht immer eine weitgehende Materialablösung sichergestellt.

Der Erfindung liegt damit das Problem zugrunde, eine Zuführvorrichtung anzugeben, die eine verbesserte Materialablösung ermöglicht.

Zur Lösung dieses Problems ist erfindungsgemäß vorgesehen, dass das Element längs der Wand bewegbar ist, wobei die Wandaußenseite Unebenheiten aufweist, über die das Element bewegt wird, und/oder das sich bei seiner Bewegung drehende Element unrund ist.

Der Erfindung liegt die Überlegung zugrunde, die Wand durch bewusstes Vorsehen von Unebenheiten oder Unsymmetrien der aneinander angreifenden Bauteile, nämlich dem bewegten Element und der Wandaußenseite, quasi rüttelnd zu verformen respektiv zu bewegen, um so das anhaftende Material quasi durch eine Rüttel- oder Schlag- oder Vibrationsbewegung abzulösen. Hierzu sind zwei unterschiedliche Erfindungsausgestaltungen denkbar. Gemäß einer ersten Ausgestaltung ist die Wandaußenseite mit Unebenheiten versehen, vorzugsweise in Form von länglichen Vorsprüngen, die an der Außenseite der vorzugsweise aus einem flexiblen Kunststoffmaterial wie Gummi oder dergleichen bestehenden Wand ausgeformt sind. Das Element, das sich vorzugsweise dreht, bei dieser Erfindungsausgestaltung jedoch nicht drehen muss, wird über diese Unebenheiten bewegt. Das heißt, dass das Element quasi über diese Unebenheiten "rattert", während welcher Bewegung infolge des dauernden Auf- und Ablaufens auf die Vorsprünge zwangsläufig die Wand deformiert wird und es zu einer quasi rüttelnden Bewegung kommt. Nachdem über die Wandfläche eine Vielzahl solcher Unebenheiten vorgesehen sind, beispielsweise 10 oder 20 parallel laufende Vorsprünge, längs welcher bzw. über welche das Element fährt, kommt es zwangsläufig während einer einzigen Elementbewegung zu einer Vielzahl von Rüttelbewegungen, die ein hervorragendes Ablösen gewährleisten. Die Frequenz der Verformungs- oder Rüttelbewegung hängt von der Bewegungsgeschwindigkeit des Elements ab. Je schneller das Element fährt, desto schneller ist die Wandbewegung und umgekehrt.

Zusätzlich oder alternativ zur Ausformung der Wandaußenseite mit den Unebenheiten ist es auch denkbar, das bei seiner Bewegung drehende Element selbst unrund auszubilden, also beispielsweise mehreckig. Auch hierüber kann eine entsprechende Wandverformung erreicht werden, wenn das Element sich drehend entlang der Wand bewegt und diese in Abhängigkeit von der gerade anliegenden Elementgeometrie entsprechend deformiert wird.

Das Element verfährt vorzugsweise automatisch, gesteuert über einen entsprechenden Antriebsmotor, über den es entlang einer Linearführung bewegt wird. Denkbar ist aber auch ein pneumatischer oder hydraulischer Zylinder oder auch ein Spindelantrieb, auf dem eine das Element führende Mutter läuft. Gesteuert wird die Elementbewegung über eine entsprechende Steuerungseinrichtung, in der die Bewegungszeitpunkte wie auch die Bewegungsgeschwindigkeit je nach Bedarf festgelegt werden kann.

Die wandseitigen Unebenheiten sind wie bereits beschrieben bevorzugt als längliche Vorsprünge ausgebildet, die zweckmäßigerweise senkrecht zur Bewegungsrichtung des Elements verlaufen. Das Element selbst ist bevorzugt horizontal zu bewegen, nachdem die Förderschnecken horizontal liegen und der Aufnahmebereich senkrecht hierzu steht. Dementsprechend sollten die Vorsprünge vertikal verlaufen.

Dabei kann das entlang der unebenen Wand bewegte Element starr oder drehbar sein. Im Falle einer starren Elementausführung kann es sich hierbei um einen hinreichend gut auf der Wandaußenseite gleitenden, vorzugsweise an seiner Spitze rundlich ausgeführten Zapfen oder Gleitschuh oder dergleichen handeln. Ein drehendes Element ist zweckmäßigerweise als einfache Rolle ausgeführt.

Das unrunde Element weist bevorzugt eine wellenartig geformte Außenseite auf. Das heißt, dass beispielsweise eine runde Grundform gegeben ist, wobei außenseitig ein Wellenprofil vorgesehen ist. Auch eine reine mehreckige Ausführung, z.B. 8-eckig, ist denkbar.

Grundsätzlich ist es zweckmäßig, wenn das Element einen die an der Wand angreifende Außenseite bildenden Kunststoffbelag aufweist, der aus einem Material ist, das eine gute Haftung zum Wandmaterial aufweist. Denn allein durch die Reibung zwischen der Elementaußenseite und der Wandaußenseite ist die Drehung des Elements, das nicht aktiv gedreht wird, sicherzustellen. Zweckmäßigerweise werden sowohl beim Wandmaterial als auch beim Kunststoffbelagmaterial hinreichend: adhäsive Kunststoffe verwendet, die nicht aufeinander abgleiten, so dass eine Drehbewegung sichergestellt ist. Der Kunststoffbelag ist am einfachsten in Form eines Rings ausgebildet, der auf ein drehgelagertes Elementteil aufgezogen ist. In der Mitte ist also die drehgelagerte Scheibe vorgesehen, auf die der Gummiring aufgespannt ist, sei es, dass dieser rund ist, wenn die Wand selbst profiliert ist, sei es, dass dieser unrund ist, wenn die Wand nicht zwangsläufig profiliert ist. Bei einer mehreckigen Ausführung ist z.B. ein mehreckiges drehgelagertes Element vorgesehen, auf das ein die Außenseite bildender Gummiring aufgezogen ist.

Um das Element möglichst einfach bewegen zu können, ist dieses zweckmäßigerweise an einem Schlitten angeordnet, welcher Schlitten auf einer Linearförderung beweglich gelagert ist. Zum Schlittenantrieb sind unterschiedliche Ausgestaltungen denkbar. Zum einen kann der Schlitten selbst einen kleinen Motor aufweisen, der ein schlittenseitiges Zahnrad antreibt, das mit einer Zahnstange der Linearführung kämmt. Denkbar sind aber auch ein hydraulischer oder pneumatischer Zylinder, der den Schlitten nebst Element auf der Linearführung verschiebt. Auch der Einsatz von Federelementen, die am Schlitten und einem lagefesten Punkt angreifen und Rückstell- oder Spannkräfte zur Schlittenbewegung aufbauen, ist denkbar, wie auch eine Gewindespindel, die über einen Motor gedreht wird und auf der eine Gewindemutter läuft, die wiederum mit dem Schlitten verbunden ist.

Wenngleich es bereits ausreichend sein kann, nur eine flexible Wand vorzusehen, ist nach einer vorteilhaften Erfindungsausgestaltung wenigstens eine weitere flexible Wand, vorzugsweise die der ersten Wand gegenüberliegende Wand vorgesehen, der ein eigenes bewegbares Element zugeordnet ist, wobei die Wand und das Element in gleicher Weise ausgeführt sind wie die erste Wand und das erste Element. Das heißt, dass an zwei gegenüberliegenden Wänden die erfindungsgemäß realisierte Rüttelbewegung realisiert werden kann, so dass ein Zusetzen vollkommen ausgeschlossen ist.

Weiterhin ist zweckmäßigerweise eine Steuerungsvorrichtung vorgesehen, über die die Bewegungsgeschwindigkeit und letztlich auch die Bewegungszeitpunkte des jeweiligen verfahrbaren Elements eingestellt werden können. Das heißt, dass je nach zugeführtem Material die Elementbewegung materialspezifisch eingestellt werden kann. Wird körnigeres oder granulares Material verwendet, so ist ein Anhaften in der Regel ausgeschlossen, so dass das Element nicht oder nur sehr selten bewegt werden muss. Anders bei der Verarbeitung von pulvrigem Material, wo das Element häufiger bewegt werden muss.

Zur Ausbildung respektive Anordnung der einen oder der mehreren Wände im Aufnahmebereich ist nach einer Weiterbildung der Erfindung vorgesehen, dass der Aufnahmebereich mittels eines im Querschnitt im Wesentlichen rechteckigen Einsatzes seitlich abgegrenzt ist, an welchem Einsatz, der aus einem flexiblen Material besteht, die eine oder die mehreren Wände ausgebildet sind. Das heißt, dass im Gehäuse eine ebenfalls im Wesentlichen rechteckige Öffnung oder Ausnehmung vorgesehen ist, die den Aufnahmebereich definiert. In diese ist der Einsatz eingesetzt. Infolge dieser Rechteckform ist auch sichergestellt, dass die eine oder die beiden über das Element deformierten Wände auch flächig verlaufen, so dass das Element in einer seitlichen Linearbewegung die Wand verformend verfahren werden kann. Unter Verwendung eines solchen Einsatzes, der den Aufnahmebereich damit vollständig an allen vier Seiten auskleidet, ist das Positionieren der Wände besonders einfach.

Um bei einer solchen Ausgestaltung das Element auf einfache Weise in Wirkungsverbindung mit der jeweiligen flexiblen Wand zu bringen ist wie bereits beschrieben das Gehäuse mit einer den Aufnahmebereich definierenden Ausnehmung versehen, wobei zu der oder jeder flexiblen Wand, die den Aufnahmebereich begrenzt, eine gehäuseseitig vorgesehene Öffnung führt, die das Element durchgreift. Das heißt, dass an einer oder an zwei gegenüberliegenden Gehäuseseiten Längsöffnungen vorgesehen sind, durch die hindurch das Element auf die freiliegende Wandaußenseite greift.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer erfindungsgemäßen Zuführvorrichtung,
- Fig. 2: eine Prinzipdarstellung eines die flexible Wände aufweisenden Einsatzes,
- Fig. 3 und Fig. 4: zwei Ansichten der Wandverformung bei einer Elementbewegung, wobei die Wand mit Unebenheiten versehen und das Element rund ist, und
- Fig. 5 und Fig. 6: zwei Ansichten zur Darstellung der Wandverformung, wobei die Wand eben ist und das Element unrund ausgeführt ist.

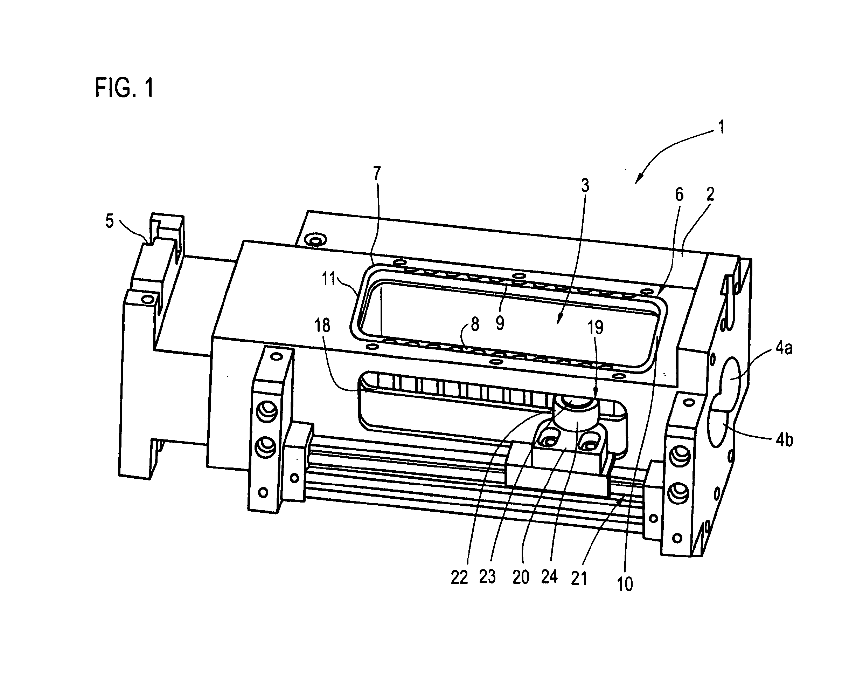

Fig. 1 zeigt eine erfindungsgemäße Zuführvorrichtung 1, umfassend ein Gehäuse 2, in oder an dem ein Aufnahmebereich 3 vorgesehen ist, der zur Aufnahme eines über die Zuführvorrichtung zuzuführenden Stoffes dient. Auf das Gehäuse 2 ist z.B. ein Trichter aufsetzbar, der in den Aufnahmebereich 3 mündet, und in den das zu fördernde Material gegeben wird. Zur Stoffförderung dienen beim gezeigten Ausführungsbeispiel 2 miteinander kämmende, das Gehäuse 3 in entsprechenden Bohrungen 4a, 4b durchsetzende Schnecken, die der Übersichtlichkeit halber hier nicht näher gezeigt sind. Die Schnecken werden in an sich bekannter Weise über einen am Gehäuse 3 angeflanschten Motor drehend angetrieben, das von oben über den Aufriahmebereich 3 auf die Schnecken fallende Material wird hierüber längs gefördert und zum nachgeschalteten Extruder oder dergleichen, der an der Anschlusswand 5 anschließt, transportiert.

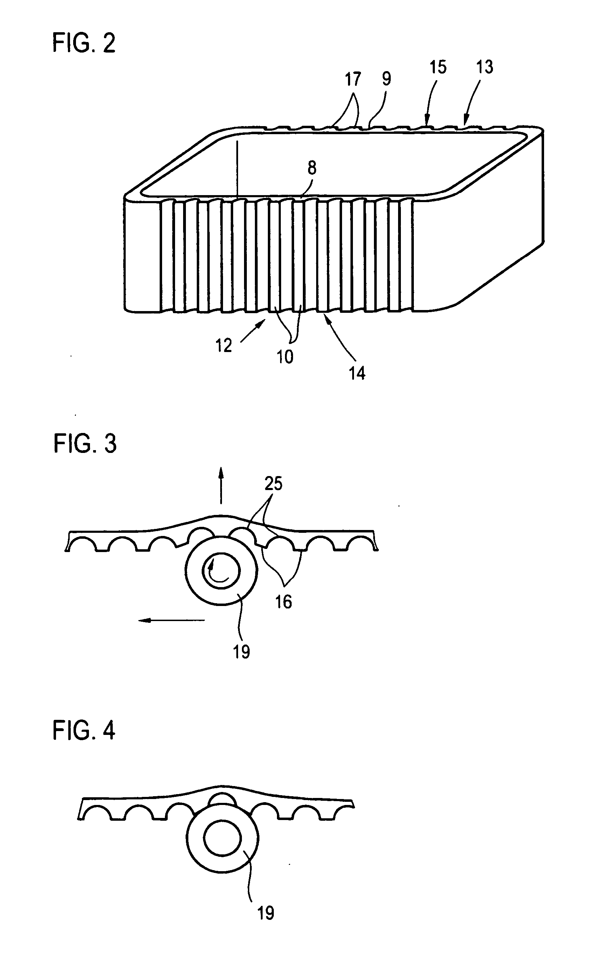

Der Aufnahmebereich 3 ist im gezeigten Ausführungsbeispiel im Wesentlichen rechteckig, wozu im Gehäuse eine diese Form definierende Ausnehmung 6 vorgesehen ist, in die ein Einsatz 7 eingesetzt ist, der aus einem hinreichend flexiblen Kunststoffmaterial, beispielsweise einem Gummi, besteht. Der Einsatz 7 weist ebenfalls eine im Wesentlichen rechteckige Form auf, nachdem er die Ausnehmung 6 vollständig an allen vier Seiten auskleidet. Am bzw. durch den Einsatz 7 sind zwei einander gegenüberliegende flexible Wände 8, 9 ausgebildet. An diesen Wänden 8, 9 wie auch natürlich an den entsprechenden beiden anderen Seitenwänden 10, 11 liegt das aufzunehmende und zuzuführende Material an. Die jeweilige Außenseite 12, 13 der jeweiligen Wand 8, 9 ist, siehe Fig. 2, bei diesem Ausführungsbeispiel mit Unebenheiten 14, 15 in Form von hier vertikal und parallel zueinander laufenden Vorsprüngen 16, 17 versehen. Es ergibt sich hier also eine Art Wellen- oder Rippenprofil an den jeweiligen Wandaußenseiten, wobei die Unebenheiten an ihrer Außenseite auch gerundet sein können, wie auch ihre Anzahl und ihr Abstand beliebig gewählt werden kann, solange sie in der erfindungsgemäßen Weise mit dem noch zu beschreibenden Element zusammenwirken.

Dieses Rippen- oder Wellenprofil an den jeweiligen Wandaußenseiten dient dazu, eine quasi rüttelnde Wandverformung zu ermöglichen. Hierzu ist am Gehäuse 2 jeweils eine Öffnung 18 vorgesehen, wobei in Fig. 1 nur die vorderseitige Öffnung 18 gezeigt ist. Diese längliche, horizontal verlaufende Öffnung führt in den Bereich der Aufnahme 6, so dass die jeweilige Wandaußenseite 12, 13 frei liegt.

Zur Deformation und Rüttelbewegung der Wand ist ein mechanisches Element 19 vorgesehen, wobei jeder Wand 8, 9 ein solches mechanisches Element 19 zugeordnet ist. Bei dem in Fig. 1 gezeigten Ausführungsbeispiel ist das Element als Rad oder Rolle ausgeführt, die drehbar auf einem Schlitten 20 angeordnet ist, der wiederum auf einer Linearführung 21, die benachbart zur Öffnung 18 horizontal liegend verläuft, längsbeweglich ist. Zum Bewegen des Schlittens 20 und damit des Elements 19 auf der Linearführung 21 kann ein Antriebsmotor und ein Zahnrad/Zahnstangentrieb, ein hydraulischer oder pneumatischer Zylinder oder ein Gewindespindelantrieb etc. vorgesehen sein. Der jeweilige Antrieb ist hier nicht näher dargestellt.

Die konkrete Anordnung ist nun derart, dass das Element 19 in der Öffnung 18 eingesetzt ist respektive diese durchgreift und mit seiner Außenseite 22 an der Wandaußenseite 12 anliegt. Das Element 19 besteht aus einem am Schlitten drehgelagerten Rad oder einer Rolle 23, auf die ein die Außenseite 22 bildender Ring 24 aus Kunststoff oder Gummi aufgezogen ist. Mit diesem Ring 24 respektive seiner Außenseite 22 drückt nun das Element 19 gegen die Außenseite 12 der Wand 8, deformiert diese also etwas und drückt sie nach innen.

Wird nun das Element 19 auf der Linearführung 21 horizontal von links nach rechts und zurück bewegt, so rollt das Element 19 auf der Außenseite 12 der Wand 8 entlang. Nachdem die Außenseite 12 über die Vorsprünge 16 profiliert ist, kommt es dabei zwangsläufig zu einem Überrollen der Vorsprünge 16 und der zwischen diesen befindlichen Täler 25. Hierbei kommt es, siehe die Figur 4, zwangsläufig zu einer kontinuierlichen lokalen Deformation der Wand, die sich jedoch aufgrund der Profilierung ständig ändert, je nach dem, ob das Element nun über einen Vorsprung rollt oder über ein zwischen zwei Vorsprüngen befindliches Tal. Hieraus resultiert eine Art Rüttelbewegung der Wand, die relativ heftig bewegt wird, so dass etwaiges anhaftendes Material sofort von der Innenseite der Wand gelöst wird. Nachdem ein entsprechendes Rütteln an beiden einander gegenüberliegenden Wänden 8, 9 erfolgt, wird hierüber mit besonderem Vorteil das Zusetzen des Aufnahmebereichs mit anhaftendem Stoff vermieden.

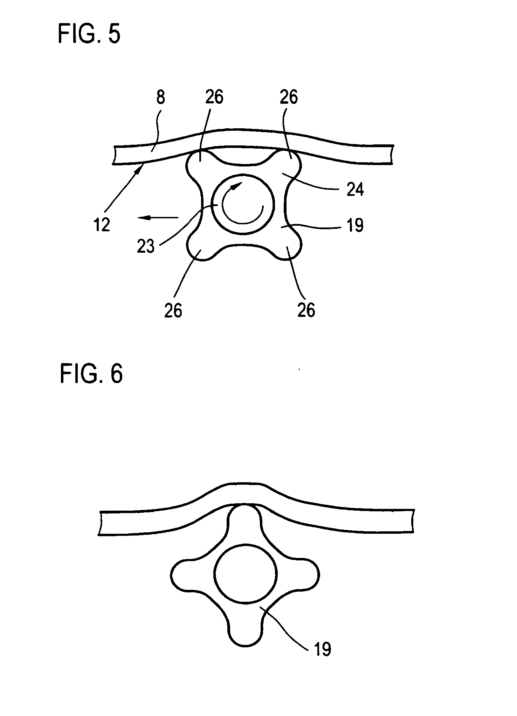

Die Figuren 5 und 6 zeigen eine alternative Ausgestaltung einer "Rüttelvorrichtung". Gezeigt ist auch hier ein Ausschnitt beispielsweise der Wand 8, deren Außenseite 12 jedoch ebenflächig ist, das heißt, hier sind keine Unebenheiten in Form von Vorsprüngen ausgeführt. Dafür ist hier das Element 19 unrund ausgeführt, was auf einfache Weise wiederum über einen auf die Rolle 23 aufgezogenen Ring 24, der außenseitig entsprechend profiliert ist, realisiert werden kann. Infolge der Unebenheit, die hier über vier vorspringende Abschnitte 26 realisiert ist, kann, siehe die Figuren 5 und 6, in gleicher Weise eine Rüttelbewegung realisiert werden, nachdem auch hier die flexible und federnde Wand 8 je nach Stellung des Elements 19 mehr oder weniger stark nach innen gedrückt respektive nach außen zurück federt.

Alternativ zu Realisierung der Elementprofilierung über den aufgezogenen Ring 24 ist es auch denkbar, die Rolle 23 mehreckig, z.B. 4-, 6- oder 8-eckig auszuführen und einen einfachen Gummiring, der die gut reibenden Außenseite bildet, aufzuziehen.

Bei der Wahl der Materialien, aus denen die Wände 8, 9 und die jeweiligen Elemente 19 respektive deren Kunststoff- oder Gummiaußenflächen gebildet sind, ist darauf zu achten, dass eine hinreichend hohe Reibung zwischen den Materialien gegeben ist, nachdem die Drehbewegung des Elements 19 nicht aktiv erfolgt, sondern ausschließlich reibungsbedingt beim Verschieben längs der Linearführung 21 einsetzt.

## Patentansprüche

1. Zuführvorrichtung für insbesondere pulverige Stoffe zu einer diese verarbeitenden Einrichtung, insbesondere einen Extruder, umfassend ein Gehäuse mit einem den Stoff aufnehmenden Aufnahmebereich, der seitlich über wenigstens eine flexible Wand, die mittels wenigstens einem an ihr angreifenden beweglichen mechanischen Element bewegbar ist, **dadurch gekennzeichnet, dass** das Element (19) längs der Wand (8, 9) bewegbar ist, wobei die Wandaußenseite (12, 13) Unebenheiten (14, 15) aufweist, über die das Element (19) bewegt wird, und/oder das sich bei seiner Bewegung drehende Element (19) unrund ist.

2. Zuführvorrichtung nach Anspruch 1, **dadurch gekennzeichnet, dass** die wandseitigen Unebenheiten (14, 15) als längliche Vorsprünge (16, 17) ausgeführt sind.

3. Zuführvorrichtung nach Anspruch 2, **dadurch gekennzeichnet, dass** die Vorsprünge (16, 17) senkrecht zur Bewegungsrichtung des Elements (19) verlaufen.

4. Zuführvorrichtung nach einem der vorangehenden Ansprüche, **dadurch gekennzeichnet, dass** das entlang der unebenen Wand (8, 9) bewegte Element (19) starr oder drehbar ist.

5. Zuführvorrichtung nach einem der vorangehenden Ansprüche, **dadurch gekennzeichnet, dass** das unrunde Element (19) eine wellenartig geformte Außenseite aufweist.

6. Zuführvorrichtung nach Anspruch 4 oder 5, **dadurch gekennzeichnet, dass** das Element (19) einen die an der Wand (8, 9) angreifende Außenseite bildenden Kunststoffbelag aufweist.

7. Zuführvorrichtung nach Anspruch 6, **dadurch gekennzeichnet, dass** der Kunststoffbelag mittels eines Rings (24), der auf ein drehgelagertes Elementteil aufgezogen ist, gebildet ist.

8. Zuführvorrichtung nach einem der vorangehenden Ansprüche, **dadurch gekennzeichnet, dass** das Element (19) an einem Schlitten (20), der auf einer Linearführung (21) beweglich gelagert ist, angeordnet ist.

9. Zuführvorrichtung nach einem der vorangehenden Ansprüche, **dadurch gekennzeichnet, dass** wenigstens eine weitere flexible Wand (9), vorzugsweise die der ersten Wand (8) gegenüberliegenden Wand (9), und ein längs der Wand (9) bewegbares weiteres Element (19) vorgesehen ist.

10. Zuführvorrichtung nach einem der vorangehenden Ansprüche, **dadurch gekennzeichnet, dass** eine Steuerungsvorrichtung vorgesehen ist, über die die Bewegungsgeschwindigkeit des oder jedes Elements (19) einstellbar ist.

11. Zuführvorrichtung nach einem der vorangehenden Ansprüche, **dadurch gekennzeichnet, dass** der Aufnahmebereich (3) mittels eines im Querschnitt im wesentlichen rechteckigen Einsatzes (7) seitlich abgegrenzt ist, an welchem Einsatz, der aus einem flexiblen Material besteht, die eine oder die mehreren Wände (8, 9) ausgebildet sind.

12. Zuführvorrichtung nach einem der vorangehenden Ansprüche, **dadurch gekennzeichnet, dass** das Gehäuse (2) eine den Aufnahmebereich (3) definierende Ausnehmung (6) aufweist, in der die eine oder die mehreren Wände (8, 9) oder der Einsatz (7) angeordnet sind, wobei zu der oder jeder flexiblen Wand (8, 9) eine gehäuseseitig vorgesehene Öffnung (18) führt, die das Element (19) durchgreift.

## Claims

1. Feeding device particularly for powdered materials into a device processing the same, in particular an extruder, comprising a housing having a receiving region for receiving the material which is movable laterally via at least one flexible wall, which is movable by means of at least one moving mechanical element acting thereon, **characterized in that** the element (19) is movable along the wall (8, 9), and the wall exterior (12, 13) has bumps (14, 15) over which the element (19) is moved, and/or the element (19) is non-round in its motion.

2. Feeding device according to claim 1, **characterized in that** the bumps (14, 15) on the wall are formed as elongate projections. (16, 17)

3. Feeding device according to claim 2, **characterized in that** the projections (16, 17) extend perpendicular to the direction of motion of the element (19).

4. Feeding device according to one of the preceding claims, **characterized in that** the element (19) moved along the uneven wall (8, 9) is rigid or rotary.

5. Feeding device according to one of the preceding claims, **characterized in that** the non-round element (19) has a corrugated exterior.

6. Feeding device according to claim 4 or 5, **characterized in that** the element (19) has a synthetic coating forming an exterior acting on the wall (8, 9).

7. Feeding device according to claim 6, **characterized in that** the synthetic coating is formed by means of a ring (24), which is mounted on a rotatably mounted element part.

8. Feeding device according to one of the preceding claims, **characterized in that** the element (19) is disposed on a slide (20) which is mounted on a linear guide (21).

9. Feeding device according to one of the preceding claims, **characterized in that** at least one further flexible wall (9), preferably the wall (9) opposite the first wall (8), and a further element (19) movable along the wall (9) are provided.

10. Feeding device according to one of the preceding claims, **characterized in that** a control device is provided via which the movement speed of the or each element (19) may be set.

11. Feeding device according to one of the preceding claims, **characterized in that** the receiving region (3) is laterally defined by an insert (7) of substantially rectangular cross-section, by which insert, which consists of a flexible material, the one or more walls (8, 9) are formed.

12. Feeding device according to one of the preceding claims, **characterized in that** the housing (2) has a recess (6) defining the receiving region (3), in which the one or more walls (8, 9) or the insert (7) are disposed, wherein an aperture (18) provided in the housing leads to the or each flexible wall (8, 9), the aperture penetrating the element (19).

## Revendications

1. Dispositif d'alimentation en matériaux notamment pulvérulents d'une machine traitant ces matériaux, en particulier une extrudeuse, comprenant un logement avec une zone de réception contenant le matériau qui est disposé latéralement au-dessus d'au moins une paroi flexible qui peut être déplacée au moyen d'au moins un élément mécanique mobile agissant sur celle-ci, **caractérisé en ce que** l'élément (19) peut être déplacé le long de la paroi (8, 9), étant entendu que le côté extérieur de la paroi (12, 13) présente des aspérités (14, 15) par le biais desquelles l'élément (19) est déplacé et/ou l'élément (19) entraîné en rotation dans son déplacement est ovalisé.

2. Dispositif d'alimentation selon la revendication 1, **caractérisé en ce que** les aspérités (14, 15) de la paroi sont réalisées sous la forme de saillies oblongues (16, 17).

3. Dispositif d'alimentation selon la revendication 2, **caractérisé en ce que** les saillies (16, 17) s'étendent perpendiculairement à la direction de déplacement de l'élément (19).

4. Dispositif d'alimentation selon l'une des revendications précédentes, **caractérisé en ce que** l'élément (19) déplacé le long de la paroi (8, 9) inégale est rigide ou rotatif.

5. Dispositif d'alimentation selon l'une des revendications précédentes, **caractérisé en ce que** l'élément (19) ovalisé présente un côté extérieur réalisé en forme de vagues.

6. Dispositif d'alimentation selon la revendication 4 ou 5, **caractérisé en ce que** l'élément (19) comprend un revêtement en matière plastique qui constitue le côté extérieur agissant avec la paroi (8, 9).

7. Dispositif d'alimentation selon la revendication 6, **caractérisé en ce que** le revêtement en matière plastique est réalisé au moyen d'une bague (24) qui est montée sur une partie de l'élément disposée en rotation.

8. Dispositif d'alimentation selon l'une des revendications précédentes, **caractérisé en ce que** l'élément (19) est agencé sur un chariot (20) qui est monté de façon mobile sur un guide linéaire (21).

9. Dispositif d'alimentation selon l'une des revendications précédentes, **caractérisé en ce qu'**il est prévu au moins une paroi flexible supplémentaire (9), de préférence la paroi (9) située en opposition à la première paroi (8), et un élément supplémentaire (19) pouvant être déplacé le long de la paroi (9).

10. Dispositif d'alimentation selon l'une des revendications précédentes, **caractérisé en ce qu'**il est prévu un dispositif de commande par le biais duquel la vitesse de déplacement de l'élément ou de chaque élément (19) peut être réglée.

11. Dispositif d'alimentation selon l'une des revendications précédentes, **caractérisé en ce que** la zone de réception (3) est délimitée latéralement au moyen d'un insert (7) d'une section sensiblement rectangulaire, sur lequel insert, qui est composé d'un matériau flexible, la ou les plusieurs parois (8, 9) sont réalisées.

12. Dispositif d'alimentation selon l'une des revendications précédentes, **caractérisé en ce que** le logement (2) comprend un évidement (6) définissant la zone de réception (3) dans lequel la ou les plusieurs parois (8, 9) ou l'insert (7) sont agencés, étant entendu qu'une ouverture (18) prévue du côté du logement, qui traverse l'élément (19), conduit jusqu'à la ou chaque paroi flexible (8, 9).
